# FASCICULE DE BREVET EUROPEEN

(11) **EP 1 459 831 B1**
(45) Date de publication et mention de la délivrance du brevet: **26.04.2006**
(21) Numéro de dépôt: 04300144.5
(22) Date de dépôt: 15.03.2004
(51) Int. Cl.: B23K 9/29

(54) **Procédé de soudage TIG avec une torche de soudage TIG robotisé comprenant un ensemble buse/guide-fil**
Verfahren zum TIG-Schweissen mit einem eine Düsen/Drahtführungsanordnung aufweisenden TIG-Roboterschweissbrenner
Process of TIG welding with a a robotic TIG welding torch having a nozzle/wire guide assembly

(30) Priorité: 17.03.2003 FR 0303237
(43) Date de publication de la demande: 22.09.2004
(73) Titulaire: LA SOUDURE AUTOGENE FRANCAISE, 75321 Paris Cedex 07 (FR); L'AIR LIQUIDE, Société Anonyme à Directoire et Conseil de Surveillance pour l'Etude et l'Exploitation des, 75321 Paris Cedex 07 (FR)
(72) Inventeur: Fortain, Jean-Marie, 95520 Osny (FR); Borne, André, 95550 Bessancourt (FR)
(74) Mandataire: Pittis, Olivier

(56) Documents cités:
- DE-A- 3 542 984
- US-A- 2 791 673
- US-A- 4 233 489
- US-A- 5 512 726
- PATENT ABSTRACTS OF JAPAN vol. 199, no. 909, 30 juillet 1999 (1999-07-30) & JP 11 104839 A (KOMATSU LTD), 20 avril 1999 (1999-04-20)
- PATENT ABSTRACTS OF JAPAN vol. 199, no. 909, 30 juillet 1999 (1999-07-30) & JP 11 104841 A (KOMATSU LTD), 20 avril 1999 (1999-04-20)

## Description

La présente invention concerne un procédé de soudage mettant en oeuvre une torche de soudage TIG automatique, conformément au préambule de la revendication 1 (voir, par exemple, JP-A-11/104 839), avec apport de fil fusible intégré dédiée au soudage robotisé.

Une torche de soudage TIG (pour Tungsten Inert Gas) alimentée en fil de soudage se présente classiquement sous la forme d'un corps monobloc doté d'aménagements internes propres à la mise en oeuvre du procédé de soudage auquel cette torche est dédiée.

Les torches peuvent être droites ou coudées, c'est-à-dire que le faisceau sort dans l'axe de la torche pour une torche droite ou perpendiculairement à l'axe de la torche pour une torche coudée.

Dans la partie arrière de la torche, couramment appelée support de torche ou embase, on trouve des canalisations d'alimentation en fluide souples ou semi-rigides qui sont raccordées au corps de torche par un système de raccordement spécifique à chaque type de canalisation.

Les câbles d'alimentation électrique sont assemblés mécaniquement le plus souvent par vissage aux circuits correspondants de la torche, sauf dans le cas de câbles refroidis par liquide ou gaz qui ont alors une fixation appropriée.

Une gaine tubulaire souple, fixée à l'arrière de la torche par un collier ou analogue, regroupe l'ensemble du faisceau de câbles de manière à le protéger.

La partie avant de la torche, encore appelée corps de torche, comprend une buse ou tuyère servant à canaliser le gaz de protection, laquelle buse est fixée au corps de torche par vissage ou tout autre système à pincement ou analogue, ainsi qu'une électrode.

La buse peut être métallique et refroidie ou non par un fluide de refroidissement, tel que de l'eau ou un gaz ; dans ce cas, elle doit être isolée électriquement du corps de torche.

Cependant, la buse peut aussi être réalisée en une matière isolante appropriée non refroidie, par exemple en céramique.

Par ailleurs, l'électrode habituellement en tungstène pur ou thorié est maintenue centrée dans le corps de torche, par un système à pince ou analogue, de sorte que la buse vienne former manchon autour de l'électrode.

En outre, un système d'alimentation en fil fusible est généralement aménagé indépendamment de la torche, c'est-à-dire qu'il vient se fixer solidairement au corps de torche ou au support de la torche, le support de la torche étant l'organe qui lie la torche à son dispositif de déplacement.

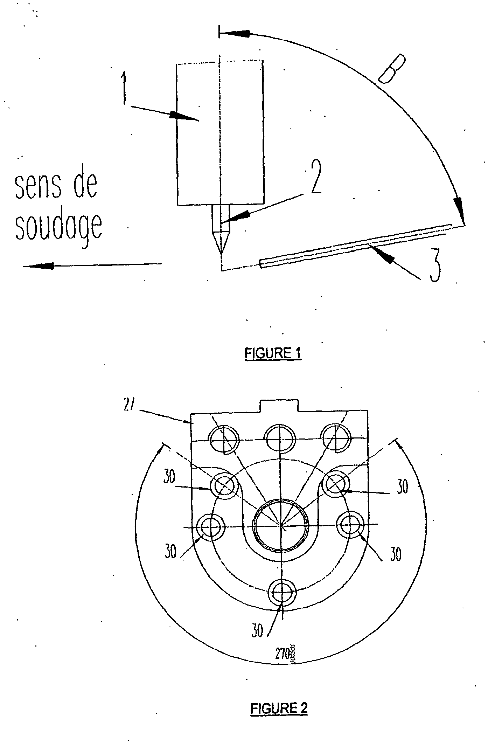

Classiquement, comme schématisé en figure 1, le fil d'apport est amené dans le bain de soudage par le système d'alimentation 3 de façon tangentielle ou quasi-tangentielle au métal liquide, à l'arrière de l'électrode 2 entourée par la buse 1, suivant le sens de soudage. Dans ces conditions habituelles, l'angle B défini par l'électrode 2 et le fil d'apport 3 est voisin d'environ 85 ° à 90°.

Or, il est apparu en pratique que ce type de torche ne convenait pas au soudage TIG robotisé car présentant plusieurs inconvénients.

Ainsi, si l'arrivée tangentielle du fil convient parfaitement à un procédé de soudage TIG automatique dans des bancs à mors parallèles, il n'en est pas de même en soudage robotisé où l'aspect encombrement est primordial pour souder en toute position.

Or, on comprend aisément qu'avoir un système d'alimentation en fil fusible qui soit aménagé indépendamment de la torche augmente l'encombrement générale de l'ensemble, ce qui va à l'encontre d'une utilisation pratique en soudage robotisé.

De plus, la gestion de la position de l'apport de fil par rapport au sens de soudage nécessite l'utilisation d'un axe supplémentaire du robot, ce qui complique l'installation et augmente son coût et les sources de pannes.

Par ailleurs, en soudage TIG, il est nécessaire d'utiliser une électrode parfaitement affûtée, c'est-à-dire pointue, pour obtenir un résultat conforme et reproductible.

Pour ce faire, il est nécessaire de réaffûter régulièrement l'électrode pour compenser son usure, voire de la remplacer totalement si son usure est trop importante.

Cette opération oblige l'opérateur à procéder à un arrêt de la machine, à un démontage de l'électrode, à son affûtage ou son remplacement, puis à son remontage et, enfin, à un réglage précis des positionnements respectifs de l'électrode et du fil de manière à retrouver la position précise du fil à l'arrière de l'électrode et tangentiellement au joint de soudage.

On comprend que cette procédure nécessite un ou plusieurs arrêts de la machine de production préjudiciables à la performance attendue d'un robot utilisé en 2 ou 3 postes, cette procédure étant d'autant plus longue que le positionnement de l'électrode et du fil doit être effectué avec précision.

Le document JP-A décrit une torche de soudage TIG comprenant une électrode non fusible en tungstène alimentée en fil fusible par un système guide-fil amenant ledit fil entre l'électrode et la pièce à souder, c'est-à-dire en aval de la buse formant manchon autour de l'électrode.

En outre, le document US-A-2 791 673 décrit un procédé de soudage mettant en oeuvre une électrode non fusible et un fil fusible qui sont tous les deux alimentés par un courant électrique de manière à fermer des arcs électriques distincts à leurs extrémités respectives.

Au vu de cela, le problème qui se pose est de proposer un procédé de soudage utilisant un ensemble buse/guide-fil pour torche de soudage à l'arc électrique avec apport de fil fusible améliorés et ne présentant pas les inconvénients susmentionnés.

Autrement dit, le but de l'invention est de proposer un procédé de soudage utilisant une nouvelle architecture de torche de soudage TIG avec fil d'apport qui permette un positionnement facile et précis du fil par rapport à l'électrode.

La solution de l'invention est un procédé de soudage ou soudo-brasage mettant en oeuvre une torche de soudage TIG comprenant une électrode non fusible et un ensemble buselguide-fil comprenant au moins une buse permettant de délivrer du gaz et au moins un système guide-fil pour guider au moins un fil fusible,
caractérisé en ce que l'extrémité aval du système guide-fil débouche à l'inténeur de la buse et dans lequel :
- on agence l'électrode non fusible de manière telle par rapport à l'ensemble buselguide-fil que le fil convoyé par le guide-fil pénètre dans la buse, en direction de l'électrode, selon un angle compris entre 5 et 50°, par rapport à l'axe de l'électrode ou de la buse, le fil et l'électrode étant dans un même plan,
- on alimente l'électrode non fusible avec un courant électrique de manière à créer un arc électrique à l'extrémité de ladite électrode non fusible
- l'extrémité du fil fusible vient frôler l'extrémité de l'électrode de telle manière que ladite extrémité du fil fusible vienne dans la tâche anodique créée par l'arc électrique à l'extrémité de l'électrode non fusible.

Selon le cas, le procédé de l'invention peut comprendre l'une ou plusieurs des caractéristiques suivantes :
- la paroi périphérique de la buse comporte au moins un évidement traversé par le système guide-fil.
- le système guide-fil est solidaire de la buse.
- le système guide-fil est creux et de forme générale oblongue, de préférence le système guide-fil a une forme de tube creux dont le diamètre interne est compris entre 0.6 mm et 2 mm.
- le système guide-fil comprend une partie parallèle à l'axe de la buse suivie d'une partie cintrée, lesdites partie parallèle et partie cintrée étant situées à l'extérieur de la buse.
- la distance (D) séparant l'axe de la partie parallèle du système guide-fil de l'axe de la buse est inférieure à 30 mm.
- la buse comporte des moyens de fixation permettant sa fixation dans la torche de soudage, de préférence les moyens de fixation comprennent un filetage aménagé sur la paroi périphérique externe de la buse.
- la torche comporte, en outre, une embase sur laquelle vient se fixer l'ensemble buse/guide-fil suivant une position pré-définie.
- la torche est agencée sur un bras robotisé d'une installation de soudage robotisé.
- on assemble par soudage ou soudo-brasage des éléments de tôles d'épaisseurs allant de 0.5 mm à 4 mm en acier au carbone, non revêtu et revêtu, en acier inoxydable férritque ou austénitique, en alliage léger d'aluminium ou magnésium.
- on utilise un fil fusible en acier non allié ou faiblement allié, en acier inoxydable ferritique ou austénitique, en nickel ou alliage de nickel, en cuivre pur ou alliage de cuivre, en aluminium ou alliage d'aluminium.
- on utilise un gaz formé de 95% d'argon + 5% d'hélium (% en volume) pour souder de l'acier inoxydable.
- on utilise un gaz formé 97.5% d'argon + 2.5% d'hydrogène (% en volume) pour souder de l'acier nu ou galvanisé.

De préférence, le fil convoyé par le guide-fil pénètre dans la buse, en direction de l'électrode, selon un angle compris entre 10 et 30°, par rapport à l'axe de l'électrode ou de la buse, le fil et l'électrode étant dans un même plan.

L'invention va être maintenant expliquée plus en détail en références aux figures annexées parmi lesquelles :
- la Figure 1 représente une vue latérale d'une configuration d'amenée de fil d'une torche TIG selon l'art antérieur,
- la Figure 2 représente une vue de dessus de l'embase d'une torche TIG utilisée dans le procédé selon l'invention,
- les Figures 3 et 4 schématisent, en vue latérale, un ensemble buse/guide-fil pour torche de soudage à l'arc électrique utilisée dans le procédé selon l'invention,
- les Figures 5 et 6 sont des coupes longitudinales d'une torche utilisée dans le procédé selon l'invention, et
- les Figures 7 à 9 schématisent les orientations possibles de l'ensemble buse/guide-fil d'une torche utilisée dans le procédé selon l'invention.

Une torche de soudage à l'arc utilisée dans le procédé selon l'invention se compose de trois sous-ensembles principaux, à savoir un support de torche ou embase 27, un corps de torche 16 et une buse 11 intégrant un système guide-fil 13 formant un ensemble monobloc buse/guide-fil.

Le support de torche ou embase supporte toutes les arrivées de fluide, notamment l'arrivée et le retour du liquide de refroidissement (eau) ; l'arrivée du ou des gaz nécessaires à la mise en oeuvre du procédé de soudage ; le raccordement de la puissance électrique via un ou plusieurs câbles d'alimentation électrique, plein ou refroidi par liquide ou gaz, leur mode de fixation étant fonction du câble considéré; et l'arrivée de la gaine de guidage du fil d'apport, celle-ci arrivant parallèlement à l'axe géométrique de la torche défini par l'électrode.

L'embase 27 est fixée au poignet d'une installation robot grâce à un élément mécanique adapté, lui-même repris sur un dispositif de sécurité "anti-choc".

L'embase 27 reçoit, d'une part, le sous-ensemble corps 16 de torche auquel elle distribue les éléments fluidiques, c'est-à-dire le gaz et l'eau de refroidissement, ainsi que la puissance électrique par l'intermédiaire d'une douille de contact destinée à assurer le contact électrique nécessaire à la mise en oeuvre du procédé de soudage et, d'autre part, le sous-ensemble buse 111guide-fil 13 auquel elle délivre le métal d'apport, c'est-à-dire le fil 14 fusible de soudage.

La conception de l'embase 27 permet un positionnement du sous-ensemble buse 11/guide-fil 13 de façon concentrique au sous-ensemble corps 16 de torche suivant une position 30 choisie préalablement en fonction de l'opération de soudage à effectuer, ces différentes positions 30 étant réparties sur une couronne de 270°, comme schématisé en figure 2.

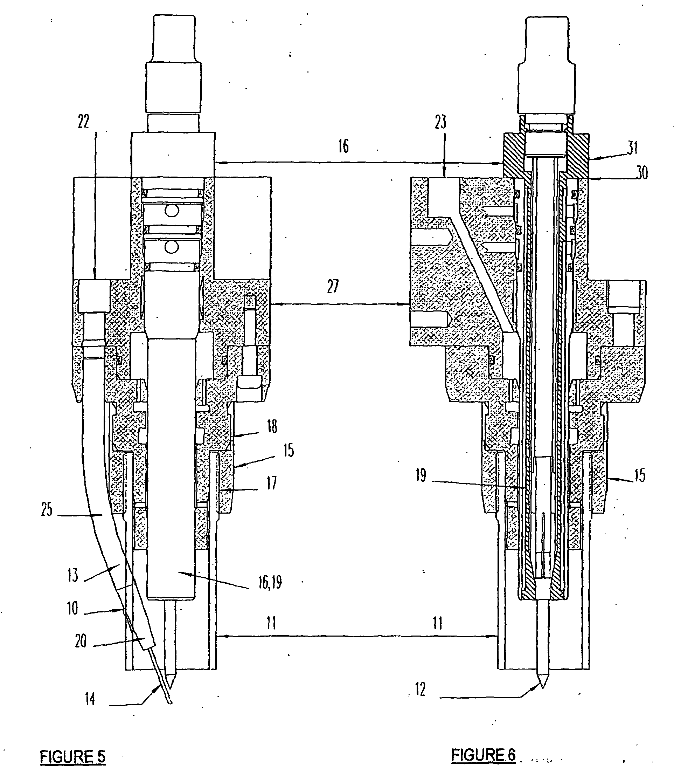

Comme montré sur les figures 5 et 6, le corps 16 de torche reçoit l'électrode 12 en tungstène pur ou thorié, réalisée dans un barreau de tungstène fritté cylindrique affûté à l'une de ses extrémités.

L'électrode 12 est maintenue centrée par un système de maintien classique, telle un système à pince poussée ou tirée, un système à emboîtement ou analogues.

L'électrode 12 peut aussi être composée de deux éléments, à savoir un support en alliage de cuivre supportant une pièce de tungstène pur ou thorié emmanchée en force, sertie ou brasée. Dans ce cas, l'électrode devient alors un consommable que l'on remplace lorsqu'il est usé.

Le corps de torche 16 peut être refroidi ou non grâce à des circuits (passage 23) de liquide de refroidissement venant du support de torche.

Le corps de torche 16 peut aussi être équipé d'un circuit supplémentaire de gaz central, il est alors équipé d'une tuyère externe agencée autour de la buse 11 pour mettre en oeuvre un procédé TIG de type à double flux.

Le corps de torche 16 est introduit dans le support de torche ou embase 27 en venant en butée (en 30) sur un épaulement 31dudit corps 16 de torche, lequel épaulement 31 sert de référence de position selon l'axe Z. Une fois positionné en butée, le corps de torche peut être verrouillé sur le support de torche 27 par un dispositif mécanique approprié pour le maintenir en position, par exemple une bague de vissage, un système à goupille ou analogue.

L'ensemble buse 11/guide-fil 13 se compose d'une buse 11 et d'un système guide-fil. 13 solidarisés l'un à l'autre, par exemple par brasage, vissage, collage ou soudage.

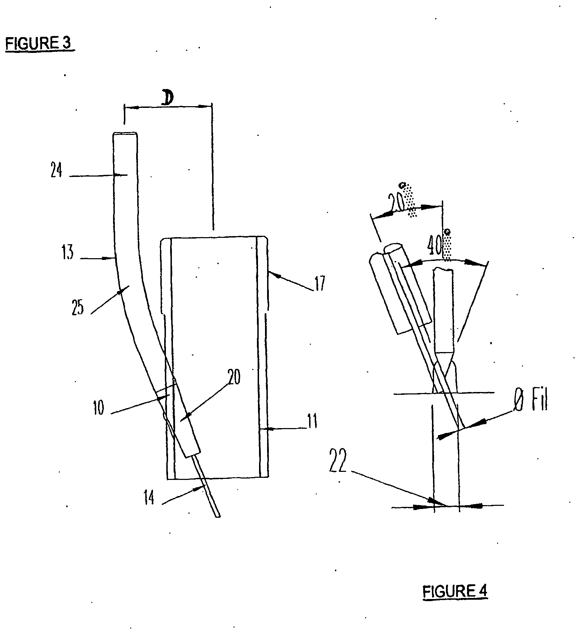

Comme détaillé sur les figures 3 et 4, la buse 11 est un élément métallique creux de forme générale cylindrique, qui peut être refroidi ou non par un liquide de refroidissement venant du support 27 de torche selon la puissance de la torche.

La buse 11 est fixée sur le support 27 de torche de façon concentrique au corps 16 de torche dont elle est isolée électriquement.

Un dispositif de réglage 15 axial permet une mise en position précise de l'ensemble buse 11/guide-fil 13 par rapport à l'électrode 12. Le dispositif de réglage 15 comprend, par exemple, une bague 15 taraudée coopérant avec une partie 18 du corps de torche 16 et un filetage 17 porté par la paroi périphérique externe de l'extrémité amont de la buse 11.

La buse 11 reçoit le guide-fil 13 servant à convoyer le fil 14 de soudage.

Le guide-fil 13 se présente sous la forme d'un élément tubulaire dont le diamètre intérieur est fonction au diamètre du fil 14 utilisé.

Le guide-fil 13 longe extérieurement la buse 11 à une faible distance D de ladite buse 11 en étant positionné parallèlement à celle-ci, typiquement à une distance D inférieure ou égale à environ 30 mm, comme montré en figure 3. La distance D est la distance séparant l'axe de la buse 11 de l'axe du tube 13 considéré à l'extérieur de la buse 11 au niveau de la portion de guide-fil 13 qui est parallèle ou quasi-parallèle (partie 24) à l'axe de la buse 19, comme visible en figure 3.

L'élément tubulaire 13 servant à convoyer le fil est cintré (partie 25) selon un rayon suffisant de manière à laisser le passage à des fils 14 semi-rigides et ce, sans coincement ou frottement excessif, et est, en outre, profilé à son extrémité 20 aval située en regard de l'électrode 12.

Le guide-fil 13 est introduit dans la buse 11 par un logement ou évidement 10 usiné de façon à ce que le fil 14 pénètre dans la buse 11, en direction de l'électrode 12, selon un angle préférentiel compris entre 10° et 30° par rapport à l'axe passant par l'électrode 12 ou la buse 11, le fil 14 et l'électrode 12 étant dans un même plan.

La géométrie de l'ensemble buse 11 /guide-fil 13 est telle que la partie terminale soit minimale, c'est-à-dire la partie non guidée du fil à sa sortie du guide fil tel que représenté en figure 4, l'extrémité aval 20 du guide-fil 13 ne devant en aucun cas venir en contact mécanique avec l'électrode 12 ou le corps de torche 16, comme montré sur les figures 3 et 4.

L'extrémité du fil d'apport 14 vient dans la tache anodique 22 crée par l'arc électrique, lors de la mise en oeuvre du procédé TIG, quelle que soit la tension d'arc obtenue pour un gaz correspondant à une hauteur de travail donnée.

Le fil d'apport 14 doit être distribué de manière telle que l'extrémité dudit fil 14 vienne frôler, c'est-à-dire se rapproche de l'extrémité de l'électrode 12 affûtée à une distance qui ne doit pas, de préférence, être inférieure au diamètre de fil d'apport 14.

La torche utilisée dans le procedé de l'invention se présente donc sous une forme monobloc, c'est-à-dire une torche TIG avec système guide-fil 13 partiellement intégré à la buse 11, et ne nécessite donc pas d'axe complémentaire pour le guidage du fil 14 par rapport au plan de joint à réaliser, ce qui la rend très pratique à intégrer sur un bras de soudage robotisé.

Le préréglage de l'électrode 12 dans le porte-électrode 19 et le réglage de la buse 11 avec guide-fil 13 intégré permet de garantir un positionnement précis du fil 14 par rapport à l'électrode 12 de sorte à ce qu'il arrive toujours dans la tache anodique de l'arc.

Le porte-électrode 19 préréglé autorise un changement rapide de ce module sans nécessité de recalage suivant l'axe Z du robot.

Le porte-électrode 19 peut être aménagé de manière à protéger l'électrode 12 avec un gaz de protection et donc assurer des conditions de fonctionnement similaires à celles d'un procédé de soudage TIG sous double flux concentriques de gaz.

Par ailleurs, la torche peut fonctionner en auto-régulation de tension d'arc, celle-ci étant assurée directement par le robot.

En outre, elle peut être également équipée d'un système industriel de suivi de joint de type mécanique ou optique, par exemple par laser avec caméra CCD (Charged Coupled Device).

Le dispositif de dévidage de fil peut être réalisé d'une manière continue ou alternative en fonction des applications et des technologies disponibles.

Les tests en soudage ont démontré que l'ensemble de soudage comprenant la torche robotique décrie ci-dessus pouvait travailler selon différentes positions géométriques dans l'espace.

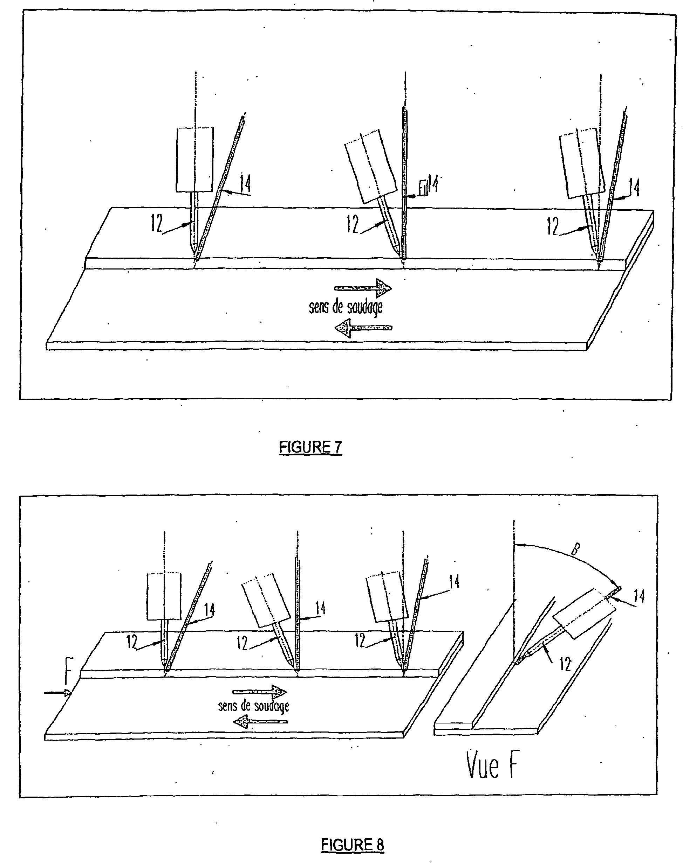

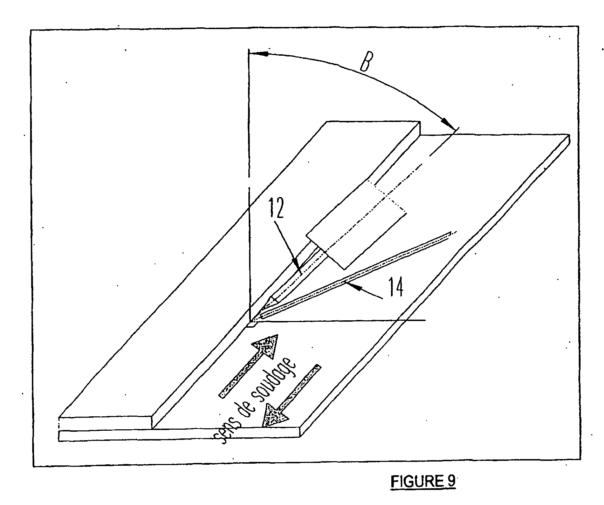

Si l'on considère le plan fil/électrode et l'angle que forme le fil 14 et l'électrode 12, l'ensemble est capable de travailler selon les configurations montrées sur les figures 7 à 9, à savoir :
- plan fil/électrode vertical dans le sens du soudage (figure 7) avec soit électrode verticale et fil arrivant sur le coté selon l'angle défini fixe (schéma de gauche sur figure 7) ; soit fil arrivant verticalement et l'électrode inclinée sur le coté selon l'angle défini fixe(schéma du milieu sur figure 7), soit axe vertical passant par la bissectrice de l'angle formé par l'axe du fil et l'axe de l'électrode (schéma de droite sur figure 7),
- plan fil/électrode incliné d'un angle B (cf. figure 8 allant de 0° à 90° par rapport à l'axe vertical dans le sens du soudage) avec soit électrode verticale et fil arrivant sur le coté selon l'angle défini fixe (schéma de gauche sur figure 8) ; soit fil arrivant verticalement et l'électrode inclinée sur le coté selon l'angle défini fixe (schéma du milieu sur figure 8) ; soit axe vertical passant par la bissectrice de l'angle formé par le fil et l'électrode (schéma de droite sur figure 8). Tous ces angles acceptent une large tolérance de ± 5° environ. Quelle que soit la configuration adoptée, le fil sera distribué préférentiellement derrière l'électrode 12 selon le sens d'avance du soudage, mais la position inverse, c'est-à-dire fil arrivant devant l'électrode selon le sens d'avance, est aussi utilisable.
- plan fil/électrode perpendiculaire au sens de soudage (voir figure 9) avec soit électrode verticale et fil arrivant sur le coté selon l'angle de construction, soit électrode inclinée d'un angle variable B pouvant aller jusqu'à 45°.

Le courant délivré par la source de soudage peut être un courant continu pulsé ou non pour les aciers au carbone ou inoxydables, les bases nickel, titane-zirconium et tantale, ou un courant alternatif ou à polarité variable pour le soudage des alliages légers à base d'aluminium ou de magnésium.

Par ailleurs, le dévidage du fil d'apport 14 utilisé dans la torche peut être continu ou pulsé par un mouvement cadencé par exemple par un dispositif mécanique type bielle, manivelle ou autre, ou un dispositif électronique de commande du moteur de dévidage.

Comme déjà évoqué, la conception de la torche permet le fonctionnement en procédé de soudage TIG de type mono ou double flux de gaz.

Le procédé de soudage de l'invention peut être utilisée pour assembler par soudage ou soudo-brasage différents éléments de tôles d'épaisseurs variables allant de 0.5 mm à 4 mm en acier au carbone, non revêtu et revêtu (électro-zingué ou galvanisé), en acier inoxydable ferritique ou austénitique, en alliage léger d'aluminium ou magnésium.

Le fil d'apport peut être, selon l'utilisation envisagée, en acier non allié ou faiblement allié, en acier inoxydable ferritique ou austénitique, en nickel ou alliage de nickel, en cuivre pur ou alliage de cuivre, en aluminium ou alliage d'aluminium.

La torche de soudage utilisée dans le procédé de l'invention est conçue de manière à pouvoir équiper un robot de soudage automatisé permettant de souder des éléments ou pièces très variés, notamment des pièces destinées à l'industrie automobile, notamment des caisses ou éléments de caisse, des capots, des portières, des liaisons de sol en aluminium ou alliages d'aluminium, des systèmes d'échappement en acier inoxydable ferritique ou austénitique, mais aussi à d'autres industries telle l'industrie des motocycles, notamment pour souder des cadres de vélos en aluminium ou alliages d'aluminium, ou encore pour fabriquer des échafaudages ou des échelles, en acier ou alliages légers.

Le procédé de l'invention est plus généralement utilisable pour la mise en oeuvre de toute opération de soudage qui nécessite l'obtention d'un bel aspect de cordon de soudage.

A titre d'exemple, le procédé selon l'invention a permis de réaliser des soudures de qualité dans les conditions données dans le tableau suivant.

**Tableau**

| Matériau | Epaisseur (en mm) | I (A) | U (V) | Courant continu de type | Gaz | Vs (m/min) | Vf (m/min ) | Fil | Configuration de soudage |
|---|---|---|---|---|---|---|---|---|---|
| Acier Inoxydable | 1 | 120 | 13 | Lisse | Arcal 31 | 1 | 1.8 | Nertalic 50 ∅1 | À clin |
| Acier nu | 1 | 150 | 11.5 | Pulsé 30Hz | Noxal 2 | 1 | 2.7 | Nertalic 46 CuAl8 ∅1 | À clin |
| Acier galvanisé | 1 | 150 | 12.5 | Pulsé 30Hz | Noxal 2 | 1.2 | 2.7 | Nertalic 46 CuAl8 ∅1 | À clin |

| | | | | | | | | | |
|---|---|---|---|---|---|---|---|---|---|
| - Arcal 31 est un gaz commercialisé par L'Air Liquide formé de 95% d'argon + 5% d'hélium (% en volume). | | | | | | | | | |
| - Noxal 2 est un gaz commercialisé par L'Air Liquide formé de 97.5% d'argon + 2.5% d'hydrogène. | | | | | | | | | |
| - Nertalic 50 est un fil commercialisé par La Soudure Autogène Française de type acier inoxydable basse teneur en carbone selon les normes AFNOR 81-313 ; DIN 1.4316 ; ou AWS ER308Lsi. | | | | | | | | | |
| - Nertalic 46 est un fil commercialisé par La Soudure Autogène Française de type Cupro Aluminium (CuAl8) selon la norme DIN 1733 ; AWS A5-7. | | | | | | | | | |

## Revendications

1. Procédé de soudage ou soudo-brasage mettant en oeuvre une torche de soudage TIG comprenant une électrode (12) non fusible et un ensemble buse/guide-fil (11, 13) comprenant au moins une buse (11) permettant de délivrer du gaz et au moins un système guide-fil (13) pour guider au moins un fil fusible (14),
**caractérisé en ce que** l'extrémité aval (20) du système guide-fil (13) débouche à l'intérieur de la buse (11), et dans lequel :
- on agence l'électrode (12) non fusible de manière telle par rapport à l'ensemble buselguide-fil (11, 13) que le fil (14) convoyé par le guide-fil (13) pénètre dans la buse (11), en direction de l'électrode (12), selon un angle compris entre 5 et 50°, par rapport à l'axe de l'électrode (12) ou de la buse (11), le fil (14) et l'électrode (12) étant dans un même plan,
- on alimente l'électrode non fusible (12) avec un courant électrique de manière à créer un arc électrique à l'extrémité de ladite électrode non fusible (12),
- l'extrémité (20) du fil fusible (14) vient frôler l'extrémité de l'électrode de telle manière que ladite extrémité (20) du fil fusible (14) vienne dans la tâche anodique (22) créée par l'arc électrique à l'extrémité de l'électrode (12) non fusible.

2. Procédé selon la revendication 1, **caractérisé en ce que** la paroi périphérique de la buse (11) comporte au moins un évidement (10) traversé par le système guide-fil (13).

3. Procédé selon l'une des revendications 1 ou 2, **caractérisée en ce que** le système guide-fil (13) est solidaire de la buse (11).

4. Procédé selon l'une des revendications 1 à 3, **caractérisé en ce que** le système guide-fil (13) est creux et de forme générale oblongue, de préférence le système guide-fil (13) a une forme de tube creux dont le diamètre interne est compris entre 0.6 mm et 2 mm.

5. Procédé selon l'une des revendications 1 à 4, **caractérisé en ce que** le système guide-fil (13) comprend une partie parallèle (24) à l'axe de la buse (11) suivie d'une partie cintrée (25), lesdites partie parallèle (24) et partie cintrée (25) étant situées à l'extérieur de la buse (11).

6. Procédé selon l'une des revendications 1 à 5, **caractérisé en ce que** la distance (D) séparant l'axe de la partie parallèle (24) du système guide-fil (13) de l'axe de la buse (11) est inférieure à 30 mm.

7. Procédé selon l'une des revendications 1 à 6, **caractérisé en ce que** la buse (12) comporte des moyens de fixation (17) permettant sa fixation dans la torche de soudage, de préférence les moyens de fixation (17) comprennent un filetage aménagé sur la paroi périphérique externe de la buse (12).

8. Procédé selon l'une des revendications 1 à 7, **caractérisée en ce que** la torche comporte, en outre, une embase (27) sur laquelle vient se fixer l'ensemble buse/guide-fil (11,13) suivant une position (30) pré-définie.

9. Procédé selon la revendication 1, **caractérisé en ce que** la torche est agencée sur un bras robotisé d'une installation de soudage robotisé.

10. Procédé selon la revendication 1, **caractérisé en ce qu'**on assemble par soudage ou soudo-brasage des éléments de tôles d'épaisseurs allant de 0.5 mm à 4 mm en acier au carbone, non revêtu et revêtu, en acier inoxydable ferritique ou austénitique, en alliage léger d'aluminium ou magnésium.

11. Procédé selon la revendication 1, **caractérisé en ce qu'**on utilise un fil fusible (14) en acier non allié ou faiblement allié, en acier inoxydable ferritique ou austénitique, en nickel ou alliage de nickel, en cuivre pur ou alliage de cuivre, en aluminium ou alliage d'aluminium.

12. Procédé selon la revendication 1, **caractérisé en ce qu'**on utilise un gaz formé de 95% d'argon + 5% d'hélium (% en volume) pour souder de l'acier inoxydable.

13. Procédé selon la revendication 1, **caractérisé en ce qu'**on utilise un gaz formé 97.5% d'argon +2.5% d'hydrogène (% en volume) pour souder de l'acier nu ou galvanisé.

## Patentansprüche

1. Verfahren zum Schweißen oder Schweißlöten, bei dem ein TIG-Schweißbrenner mit einer nicht abschmelzenden Elektrode (12) und eine Düsen-/Drahtführungsanordnung (11, 13) mit mindestens einer Düse (11) zur Begasung und mindestens einem Drahtführungssystem (13) zur Führung von mindestens einem Schmelzdraht (14), zum Einsatz kommen,
**dadurch gekennzeichnet, dass** das freie Ende (20) des Drahtführungssystems (13) ins Innere der Düse (11) mündet, und bei dem:
- die nicht abschmelzende Elektrode (12) so zur Düsen-/Drahtführungsanordnung (11, 13) angeordnet ist, dass der von der Drahtführung (13) geführte Draht (14) in einem Winkel zwischen 5 und 50° zur Achse der Elektrode (12) oder der Düse (11) in Richtung Elektrode (12) in die Düse (11) eindringt, wobei der Draht (14) und die Elektrode (12) auf einer Ebene liegen, '
- die nicht abschmelzende Elektrode (12) so mit einem elektrischen Strom gespeist wird, dass am Ende der nicht abschmelzenden Elektrode (12) ein Lichtbogen erzeugt wird,
- das Ende (20) des Schmelzdrahtes (14) das Ende der Elektrode so berührt, dass das Ende (20) des Schmelzdrahtes (14) in den durch den Lichtbogen am Ende der nicht abschmelzenden Elektrode (12) erzeugten Anodenfleck (22) gelangt.

2. Verfahren nach Anspruch 1, **dadurch gekennzeichnet, dass** die Umfangswand der Düse (11) mindestens eine Ausnehmung (10) aufweist, durch die das Drahtführungssystem (13) hindurchgeführt ist.

3. Verfahren nach einem der Ansprüche 1 oder 2, **dadurch gekennzeichnet, dass** das Drahtführungssystem (13) fest mit der Düse (11) verbunden ist.

4. Verfahren nach einem der Ansprüche 1 bis 3, **dadurch gekennzeichnet, dass** das Drahtführungssystem (13) hohl ist und eine allgemein längliche Form aufweist, vorzugsweise ist das Drahtführungssystem (13) als hohles Rohr mit einem Innendurchmesser von 0,6 mm bis 2 mm ausgebildet.

5. Verfahren nach einem der Ansprüche 1 bis 4, **dadurch gekennzeichnet, dass** das Drahtführungssystem (13) einen zur Achse der Düse (11) parallel angeordneten Teil (24) aufweist, an den ein gebogener Teil (25) anschließt, wobei der parallele Teil (24) und der gebogene Teil (25) außerhalb der Düse (11) angeordnet sind.

6. Verfahren nach einem der Ansprüche 1 bis 5, **dadurch gekennzeichnet, dass** der Abstand (D) zwischen der Achse des parallelen Teils (24) des Drahtführungssystems (13) und der Achse der Düse (11) kleiner ist als 30 mm.

7. Verfahren nach einem der Ansprüche 1 bis 6, **dadurch gekennzeichnet, dass** die Düse (11) Befestigungsmittel (17) zu ihrer Befestigung im Schweißbrenner, vorzugsweise Befestigungsmittel (17) mit einem an der äußeren Umfangswand der Düse (11) angebrachten Gewinde aufweist.

8. Verfahren nach einem der Ansprüche 1 bis 7, **dadurch gekennzeichnet, dass** der Schweißbrenner weiterhin eine Grundplatte (27) aufweist, auf der die Düsen-/Drahtführungsanordnung (11, 13) in einer vorbestimmten Position (30) befestigt wird.

9. Verfahren nach Anspruch 1, **dadurch gekennzeichnet, dass** der Schweißbrenner auf einem Roboterarm einer Roboterschweißanlage angeordnet ist.

10. Verfahren nach Anspruch 1, **dadurch gekennzeichnet, dass** Blechelemente mit Dicken von 0,5 mm bis 4 mm aus unbeschichtetem und beschichtetem Kohlenstoffstahl, aus ferritischem oder austenitischem rostfreiem Stahl, aus Aluminium oder Aluminiumlegierung durch Schweißen oder Schweißlöten verbunden werden

11. Verfahren nach Anspruch 1, **dadurch gekennzeichnet, dass** ein Schmelzdraht (14) aus unlegiertem oder niedriglegiertem Stahl, aus ferritischem oder austenitischem rostfreiem Stahl, aus Nickel oder Nickellegierung, aus reinem Kupfer oder Kupferlegierung, aus Aluminium oder Aluminiumlegierung verwendet wird.

12. Verfahren nach Anspruch 1, **dadurch gekennzeichnet, dass** zum Schweißen des Edelstahls ein aus 95 % Argon + 5 % Helium (Volumenprozent) gebildetes Gas verwendet wird.

13. Verfahren nach Anspruch 1, **dadurch gekennzeichnet, dass** zum Schweißen des blanken oder galvanisierten Stahls ein aus 97,5 % Argon + 2,5 % Wasserstoff (Volumenprozent) gebildetes Gas verwendet wird.

## Claims

1. Welding or braze-welding process using a TIG welding torch comprising a non-consumable electrode (12) and a nozzle/wire-guide assembly (11, 13), comprising at least one nozzle (11) for delivering gas and at least one wire-guide system (13) for guiding at least one consumable wire (14),
**characterized in that** the downstream end (20) of the wire-guide system (13) emerges inside the nozzle (11) and in which:
- the non-consumable electrode (12) is arranged in such a way relative to the nozzle/wire-guide assembly (11, 13) that the wire (14) conveyed by the wire guide (13) penetrates into the nozzle (11), towards the electrode (12), at an angle of between 5 and 50° to the axis of the electrode (12) or of the nozzle (11), the wire (14) and the electrode (12) lying in the same plane;
- the non-consumable electrode (12) is supplied with an electric current so as to create an electric arc at the end of the said non-consumable electrode (12); and
- the end (20) of the consumable wire (14) lightly touches the end of the electrode in such a way that the said end (20) of the consumable wire (14) enters the anode spot (22) created by the electric arc at the end of the non-consumable electrode (12).

2. Process according to Claim 1, **characterized in that** the peripheral wall of the nozzle (11) includes at least one recess (10) through which the wire-guide system (13) passes.

3. Process according to either of Claims 1 and 2, **characterized in that** the wire-guide system (13) is fastened to the nozzle (11).

4. Process according to one of Claims 1 to 3, **characterized in that** the wire-guide system (13) is hollow and of oblong general shape, the wire-guide system (13) preferably having the form of a hollow tube, the inside diameter of which is between 0.6 mm and 2 mm .

5. Process according to one of Claims 1 to 4, **characterized in that** the wire-guide system (13) includes a part (24) parallel to the axis of the nozzle (11) followed by a curved part (25), said parallel part (24) and said curved part (25 being situated outside the nozzle (11).

6. Process according to one of Claims 1 to 5, **characterized in that** the distance (D) separating the axis of the parallel part (24) of the wire-guide system (13) from the axis of the nozzle (11) is less than 30 mm.

7. Process according to one of Claims 1 to 6, **characterized in that** the nozzle (11) comprises attachment means (17) enabling it to be attached to the welding torch, the attachment means (17) preferably comprising a thread provided on the outer peripheral wall of the nozzle (11).

8. Process according to one of Claims 1 to 7, **characterized in that** the torch further includes a mounting (27) onto which the wire-guide/nozzle assembly (11, 13) is fitted in a predefined position (30).

9. Process according to Claim 1, **characterized in that** the torch is provided on a robotic arm of a robotic welding unit.

10. Process according to Claim 1, **characterized in that** sheet metal workpieces are joined by welding or braze-welding, said workpieces ranging in thickness from 0.5 mm to 4 mm, made of carbon steel, whether coated or not, ferritic or austenitic stainless steel, or an aluminium or magnesium light alloy.

11. Process according to Claim 1, **characterized in that** a consumable wire (14) made of non-alloy or low-alloy steel, ferritic or austenitic stainless steel, nickel or a nickel alloy, pure copper or a copper alloy, aluminium or an aluminium alloy is used.

12. Process according to Claim 1, **characterized in that** a gas formed from 95% argon + 5% helium (% by volume) is used for welding stainless steel.

13. Process according to Claim 1, **characterized in that** a gas formed from 97.5% argon + 2.5% hydrogen (% by volume) is used to weld bare or galvanized steel.
